# EUROPÄISCHE PATENTANMELDUNG

(11) **EP 4 309 958 A1**
(43) Veröffentlichungstag der Anmeldung: **24.01.2024**
(21) Anmeldenummer: 23181291.8
(22) Anmeldetag: 23.06.2023
(51) Int. Cl.: B60R 16/00, H02G 3/30, H02G 3/32, B60R 16/02

(54) **ROUTERCLIP, KABELBAUM, FORM UND VERFAHREN**

(30) Priorität: 23.06.2022 DE 102022115703
(71) Anmelder: Yazaki Systems Technologies GmbH, 93059 Regensburg (DE)
(72) Erfinder: CHOUDHURY, Nupur, 93049 Regensburg (DE)
(74) Vertreter: Patentanwaltskanzlei WILHELM & BECK

(57) **Zusammenfassung**

Die Erfindung betrifft einen Routerclip (15), einen Kabelbaum (30), eine Form (300) sowie ein Verfahren. Der Routerclip (15) weist einen Halter (100), einen Verbindungsabschnitt (105), einen Befestigungsabschnitt (110) und einen Gegenhalter (115) auf, wobei sich der Verbindungsabschnitt (105) in einer ersten Richtung (z) erstreckt und den Halter (100) mit dem Gegenhalter (115) verbindet, wobei der Befestigungsabschnitt (110) mit dem Halter (100) verbunden ist, wobei der Befestigungsabschnitt (110) ausgebildet ist, in die Komponente (30) einzugreifen und den Routerclip (15) an der Komponente (30) zu befestigen, wobei der erste Halterabschnitt (170) und der erste Gegenhalterabschnitt (160) eine erste Querseite (165) des Verbindungsabschnitts (105) überragen und gemeinsam einen ersten Aufnahmeraum (175) begrenzen, wobei der Halter (100) mit einem zum ersten Halterabschnitt (170) in einer zur ersten Richtung (z) geneigt verlaufenden zweiten Richtung (y) gegenüberliegend angeordneten zweiten Halterabschnitt (190) und der Gegenhalter (115) mit einem zum ersten Gegenhalterabschnitt (160) in der zweiten Richtung (y) gegenüberliegend angeordneten zweiten Gegenhalterabschnitt (185) eine zweite Querseite (180) des Verbindungsabschnitts (105) überragen und gemeinsam einen zweiten Aufnahmeraum (195) zur Aufnahme eines zweiten Teils (41) der Kabelanordnung (20) des Kabelbaums (10) begrenzen.

## Beschreibung

Die Erfindung betrifft einen Routerclip zur Befestigung eines Kabelbaums an einer Komponente eines Fahrzeugs gemäß Patentanspruch 1, einen Kabelbaum mit solch einem Routerclip gemäß Patentanspruch 8, eine Form zur Herstellung des Kabelbaums gemäß Patentanspruch 10 sowie ein Verfahren zur Herstellung des Kabelbaums gemäß Patentanspruch 12.

Um einen Kabelbaum im Kraftfahrzeug zu befestigen, werden die Kabel mit einem Band umwickelt. Ferner wird um eine Kabelanordnung des Kabelbaums ein Kabelbinder gezurrt, der mit einem Befestigungsclip verbunden ist.

Es ist Aufgabe der Erfindung, einen Routerclip, einen verbesserten Kabelbaum, eine verbesserte Form zur Herstellung des Kabelbaums und ein verbessertes Verfahren bereitzustellen.

Diese Aufgabe wird mittels eines Routerclips gemäß Patentanspruch 1, eines Kabelbaums gemäß Patentanspruch 8, einer Form gemäß Patentanspruch 10 und eines Verfahrens gemäß Patentanspruch 12 gelöst. Vorteilhafte Ausführungsformen sind in den abhängigen Ansprüchen angegeben.

Es wurde erkannt, dass ein verbesserter Routerclip zur Befestigung eines Kabelbaums an einer Komponente eines Fahrzeugs dadurch bereitgestellt werden kann, dass der Routerclip einen Halter, einen Verbindungsabschnitt, einen Befestigungsabschnitt und einen Gegenhalter aufweist. Der Verbindungsabschnitt erstreckt in einer ersten Richtung und verbindet den Gegenhalter mit dem Halter. Der Befestigungsabschnitt ist auf einer dem Verbindungsabschnitt abgewandten Seite des Halters angeordnet und mit dem Halter verbunden. Der Befestigungsabschnitt ist ausgebildet, in die Komponente einzugreifen und den Routerclip an der Komponente zu befestigen. Der Halter überragt mit einem ersten Halterabschnitt und der Gegenhalter überragt mit einem ersten Gegenhalterabschnitt eine erste Querseite des Verbindungsabschnitts. Die erste Querseite, der Halter und der Gegenhalter begrenzen gemeinsam einen ersten Aufnahmeraum zur Aufnahme eines ersten Teils einer Kabelanordnung des Kabelbaums. Der Halter überragt mit einem zum ersten Halterabschnitt in einer zur ersten Richtung geneigt verlaufenden zweiten Richtung gegenüberliegend angeordneten zweiten Halterabschnitt und der Gegenhalter überragt mit einem zum ersten Gegenhalterabschnitt in der zweiten Richtung gegenüberliegend angeordneten zweiten Gegenhalterabschnitt eine zweite Querseite des Verbindungsabschnitts. Der zweite Gegenhalterabschnitt, der zweite Halterabschnitt und die zweite Querseite des Verbindungsabschnitts begrenzen gemeinsam einen zweiten Aufnahmeraum zur Aufnahme eines zweiten Teils der Kabelanordnung des Kabelbaums.

Diese Ausgestaltung hat den Vorteil, dass der Routerclip zwei seitlich offene Aufnahmeräume zur Aufnahme von Kabeln der Kabelanordnungen begrenzt und durch den Gegenhalter und den Halter die Kabel besonders gut fixiert werden können.

In einer weiteren Ausführungsform erstreckt sich der Verbindungsabschnitt entlang einer Geraden, wobei ein erstes freies Ende des ersten Gegenhalterabschnitts einen geringeren minimalen Abstand in der ersten Richtung zu dem Halter aufweist als ein drittes festes Ende des Verbindungsabschnitts, an dem der Verbindungsabschnitt mit dem Gegenhalter verbunden ist. Dadurch ist das erste freie Ende zu dem Halter hin versetzt gegenüber dem dritten festen Ende angeordnet, wodurch ein Herausrutschen von Kabeln aus dem ersten Aufnahmeraum wirksam verhindert werden kann.

In einer weiteren Ausführungsform weist der erste Gegenhalterabschnitt eine erste Verzahnung auf. Die erste Verzahnung ist dem Halter zugewandt. Zusätzlich oder alternativ weist der zweite Gegenhalterabschnitt eine zweite Verzahnung auf, wobei die zweite Verzahnung dem Halter zugewandt ist. Diese Ausgestaltung hat den Vorteil, dass zusätzlich das Herausrutschen oder Entlanggleichen von Kabeln in der zweiten Richtung am ersten Gegenhalterabschnitt oder am zweiten Gegenhalterabschnitt durch die jeweils zugeordnete Verzahnung wirksam verhindert wird.

In einer weiteren Ausführungsform weist der Verbindungsabschnitt an der ersten Querseite eine dritte Verzahnung auf, die sich in den ersten Aufnahmeraum erstreckt. Zusätzlich oder alternativ weist der Verbindungsabschnitt an der zweiten Querseite eine vierte Verzahnung auf, die sich in den zweiten Aufnahmeraum erstreckt. Durch die dritte und/oder vierte Verzahnung wird eine Oberfläche des Verbindungsabschnitts vergrößert, sodass eine gute Anhaftung und eine festere stoffschlüssige Verbindung zwischen einem Schaumwerkstoff einer Ummantelung des Kabelbaums und dem Verbindungsabschnitt hergestellt werden kann. Ferner kann mittels der dritten und vierten Verzahnung ein zusätzlicher formschlüssiger Eingriff in die Kabelanordnung erreicht werden, sodass der Routerclip besonders gut mit der Kabelanordnung und der Ummantelung verbunden ist.

Von besonderem Vorteil ist dabei, wenn die erste Verzahnung und die dritte Verzahnung parallel zueinander verlaufend ausgerichtet sind. Zusätzlich oder alternativ sind die erste Verzahnung und die dritte Verzahnung parallel zu dem Halter verlaufend ausgerichtet.

In einer weiteren Ausführungsform ist der Halter plattenförmig ausgebildet und weist auf einer dem Verbindungsabschnitt abgewandten Seite eine erste Anlagefläche auf. Die erste Anlagefläche ist im Wesentlichen plan ausgebildet. Diese Ausgestaltung hat den Vorteil, dass mit der ersten Anlagefläche der Halter auf der Komponente des Kraftfahrzeugs, an der der Kabelbaum zu fixieren ist, flächig aufliegen kann. Ferner wird eine gute Dichtfunktion an der ersten Anlagefläche in einer Form, mit der der Kabelbaum hergestellt wird, durch den Routerclip hergestellt.

In einer weiteren Ausführungsform schließt sich die erste Anlagefläche seitlich an den Befestigungsabschnitt an und der Router überragt den Befestigungsabschnitt in der zweiten Richtung. Diese Ausgestaltung hat den Vorteil, dass ein ungewolltes Verkippen des Routerclips an der Komponente des Kraftfahrzeugs, an der der Kabel befestigt wird, durch den Halter und Gegenhalter verhindert werden kann.

In einer weiteren Ausführungsform sind der Halter, der Gegenhalter, der Verbindungsabschnitt und der Befestigungsabschnitt einstückig und materialeinheitlich aus einem zweiten Werkstoff ausgebildet. Der Routerclip weist wenigstens einen der folgenden zweiten Werkstoffe auf: Polyamid, Polypropylen, Polyethylen. Von besonderem Vorteil ist, wenn der Routerclip in einem Spritzgussvorgang spritzgegossen ist oder wenn der Routerclip 3D-gedruckt ist. Dadurch kann der Routerclip besonders einfach und kostengünstig hergestellt werden.

Von besonderem Vorteil ist, wenn der erste Gegenhalterabschnitt und/oder der zweite Gegenhalterabschnitt und/oder der Halter und/oder der Verbindungsabschnitt im Wesentlichen starr ausgebildet sind. Dabei wird unter starr verstanden, dass bei einer üblichen, auf den Gegenhalterabschnitt wirkenden Kraft zum Halten und/oder Fixieren der Kabelanordnung und/oder beim Ziehen/Reißen/Schwingung der Kabelanordnung während Betrieb des Fahrzeugs der erste Gegenhalterabschnitt und/oder der zweite Gegenhalterabschnitt und/oder der Halter nur eine Biegung von < 3 % an dem jeweils am weitesten vom Verbindungsabschnitt angeordneten Punkt aufweist. Bezüglich dem Verbindungsabschnitt wird unter starr verstanden, dass nur eine Biegung von < 3 % an dem jeweils am weitesten vom Halter angeordneten Punkt aufweist.

Von besonderem Vorteil ist, wenn der Kabelbaum einen Routerclip, eine Kabelanordnung von elektrischen Kabeln und eine Ummantelung aufweist. Der Routerclip ist wie oben beschrieben ausgebildet. Die elektrischen Kabel sind entlang einer Längsrichtung, die geneigt zu der ersten Richtung und zu der zweiten Richtung ist, geführt. Ein erster Teil der Kabelanordnung ist durch den ersten Aufnahmeraum geführt. Ein zweiter Teil der Kabelanordnung ist durch den zweiten Aufnahmeraum geführt. Zumindest der Verbindungsabschnitt, vorzugsweise der Gegenhalter und/oder der Halter sind in die Ummantelung, zumindest abschnittsweise, vorzugsweise zumindest für 80 Prozent, insbesondere vollständig, eingebettet. Der Befestigungsabschnitt überragt die Ummantelung in der ersten Richtung. Diese Ausgestaltung hat den Vorteil, dass mittels des Routerclips zum einen die Kabelanordnung durchgriffen wird und zum anderen die Kabelanordnung und die Ummantelung mittels des Befestigungsabschnitts in dem Kraftfahrzeug befestigt werden können. Durch die Einbettung des Verbindungsabschnitts, vorzugsweise des Gegenhalters und/oder des Halters in die Ummantelung, wird eine stoffschlüssige Verbindung mit diesen bereitgestellt, sodass der Routerclip zusätzlich auch mit der Ummantelung gut mechanisch verbunden ist und dadurch eine besonders feste Verbindung zwischen Routerclip und Kabelbaum vorherrscht.

In einer weiteren Ausführungsform weist die Ummantelung einen Schaumwerkstoff auf, wobei der Schaumwerkstoff wenigstens einen der folgenden ersten Werkstoffe aufweist: Polyurethan, geschlossenporigen Schaum, offenporigen Schaum, Silikon, Elastomers, gemischtporigen Schaum und Polymer-Füllstoff-Matrizen. Dadurch kann der Kabelbaum besonders einfach und kostengünstig hergestellt werden.

Eine verbesserte Form zur Herstellung des Kabelbaums kann dadurch bereitgestellt werden, dass die Form ein erstes Formteil mit einem ersten Formraum aufweist. Das erste Formteil weist einen ersten Wandungsabschnitt, einen Bodenabschnitt und einen zweiten Wandungsabschnitt auf. In einer zweiten Richtung ist der zweite Wandungsabschnitt gegenüberliegend zu dem ersten Wandungsabschnitt angeordnet. Der Bodenabschnitt verbindet den ersten Wandungsabschnitt mit dem zweiten Wandungsabschnitt. Der erste Wandungsabschnitt und/oder der zweite Wandungsabschnitt weist einen dritten Werkstoff auf. Der dritte Werkstoff ist derart gewählt, dass der erste Wandungsabschnitt mehrfach reversibel um eine erste Biegeachse von wenigstens 30° bis 90° in den ersten Formraum oder vom ersten Formraum weg aus einer ersten Halteposition in eine erste Einlegeposition biegbar ist. In der ersten Einlegeposition ist der erste Formraum aufgeweitet und in der ersten Halteposition ist der erste Formraum abschnittsweise durch den ersten Wandungsabschnitt in der zweiten Richtung verschlossen. Diese Ausgestaltung hat den Vorteil, dass auf einfache Weise Kabel in den Formraum seitlich eingelegt werden können und der Formraum nach wie vor nach oben hin offen ist. Insbesondere wenn in das erste Formteil der oben beschriebene Routerclip eingesetzt ist, kann durch das seitliche Aufbiegen des ersten Wandungsabschnitts der erste Aufnahmeraum geöffnet werden, um das erste Kabel in den ersten Aufnahmeraum einzulegen. Dadurch dient der Routerclip während des Routens der Kabel als Befestigung und verhindert in Verbindung mit der Form ein ungewolltes Herausrutschen der bereits in den Formraum eingelegten Kabel.

In einer weiteren Ausführungsform ist der dritte Werkstoff derart gewählt, dass der zweite Wandungsabschnitt mehrfach reversibel um eine zur ersten Biegeachse im Wesentlichen parallel verlaufende zweite Biegeachse um wenigstens 50° bis 90° in den Formraum oder vom Formraum weg aus einer zweiten Halteposition in eine zweite Einlegeposition biegbar ist. In der zweiten Einlegeposition ist der Formraum in der zweiten Richtung offen und in der zweiten Halteposition ist der Formraum zumindest abschnittweise durch den zweiten Wandungsabschnitt verschlossen. Diese Ausgestaltung hat den Vorteil, dass auch an dem zweiten Wandungsabschnitt entlang in der zweiten Einlegeposition elektrische Kabel von der Seite in den Formraum eingebracht werden können. Insbesondere können, wenn der Routerclip in das erste Formteil eingesetzt ist, bei dem in die zweite Einlegeposition gebogenen zweiten Wandungsabschnitt Kabel in den zweiten Aufnahmeraum eingeführt werden.

In einer weiteren Ausführungsform ist der erste Wandungsabschnitt unabhängig von dem zweiten Wandungsabschnitt zwischen der ersten Einlegeposition und der ersten Halteposition reversibel elastisch biegbar. Diese Ausgestaltung hat den Vorteil, dass Kabel, die beispielsweise durch den zweiten Aufnahmeraum geführt sind, nicht aus dem Formraum herausrutschen können, wenn der erste Wandungsabschnitt aus der ersten Halteposition in die erste Einlegeposition gebogen wird.

Ein besonders kosteneffizientes und einfaches Verfahren zur Herstellung eines Kabelbaums wird dadurch bereitgestellt, dass eine Form mit einem Formraum bereitgestellt wird. In die Form ein oben beschriebener Routerclip eingebracht. Die elektrischen Kabel werden derart in den Formraum eingelegt, dass ein erster Teil der Kabelanordnung durch den ersten Aufnahmeraum und ein zweiter Teil der Kabelanordnung durch den zweiten Aufnahmeraum geführt werden, wobei ein flüssiger erster Werkstoff und/oder wenigstens ein flüssiges erstes Vorprodukt des ersten Werkstoffs in den Formraum eingebracht wird. Der flüssige erste Werkstoff und/oder das erste Vorprodukt des ersten Werkstoffs dringt in den ersten Aufnahmeraum und/oder in den zweiten Aufnahmeraum ein und umschließt zumindest abschnittweise den Verbindungsabschnitt, den ersten Teil der Kabelanordnung und/oder den zweiten Teil der Kabelanordnung. Der flüssige erste Werkstoff oder das flüssige erste Vorprodukt des ersten Werkstoffs werden zu dem Schaumwerkstoff der Ummantelung ausgehärtet, die stoffschlüssig den Routerclip mit der Kabelanordnung verbindet. Diese Ausgestaltung hat den Vorteil, dass der Kabelbaum teilautomatisiert oder vollautomatisiert herstellbar ist.

In einer weiteren Ausführungsform wird die oben beschriebene Form bereitgestellt. Der erste Wandungsabschnitt wird aus der ersten Halteposition vom Formraum reversibel elastisch in die erste Einlegeposition derart gebogen, dass der erste Aufnahmeraum des Routerclips geöffnet ist. In der ersten Einlegeposition des ersten Wandungsabschnitts wird ein erstes elektrisches Kabel in den ersten Aufnahmeraum eingeführt. Der erste Wandungsabschnitt wird aus der ersten Einlegeposition zurück in die erste Halteposition überführt. Diese Ausgestaltung hat den Vorteil, dass mittels des elastischen Wandungsabschnitts der erste Aufnahmeraum leicht zugänglich ist und, nachdem schon mehrere Kabel in den Formraum eingelegt sind, durch das Aufbiegen des ersten Wandungsabschnitts weitere elektrische Kabel auf einfache Weise in den ersten Aufnahmeraum eingeführt werden können. Dabei erfolgt das Einfügen vorzugsweise entlang des gekrümmten, nach außen oder innen hin gebogenen ersten Wandungsabschnitts.

In einer weiteren Ausführungsform wird der zweite Wandungsabschnitt aus einer zweiten Halteposition vom Formraum weg reversibel elastisch in eine zweite Einlegeposition derart gebogen, dass der zweite Aufnahmeraum des Routerclips geöffnet ist. In der zweiten Einlegeposition des zweiten Wandungsabschnitts wird ein zweites elektrisches Kabel der Kabelanordnung in den zweiten Aufnahmeraum eingeführt. Der zweite Wandungsabschnitt wird aus der zweiten Einlegeposition zurück in die zweite Halteposition überführt. Dadurch ist das zweite elektrische Kabel in dem zweiten Aufnahmeraum durch den zweiten Wandungsabschnitt gesichert und ein Herausrutschen des zweiten Kabels aus dem zweiten Aufnahmeraum und aus dem Formraum wird dadurch verhindert.

In einer weiteren Ausführungsform ist der erste Wandungsabschnitt in der ersten Halteposition entspannt, wobei beim Biegen des ersten Wandungsabschnitts aus der ersten Halteposition in die erste Einlegeposition der erste Wandungsabschnitt unter Bereitstellung einer ersten Spannkraft gespannt wird. Bei Aufhebung der ersten Spannkraft kehrt der erste Wandungsabschnitt aus der ersten Einlegeposition selbstständig in die erste Halteposition zurück. Diese Ausgestaltung hat den Vorteil, dass insbesondere die erste Spannkraft mittels Finger oder eines Öffnungsmittels bereitgestellt werden kann, sodass, nachdem der Finger oder das Öffnungsmittel an dem Routerclip vorbeigefahren ist, die Form automatisch wieder den Aufnahmeraum verschließt.

Nachfolgend wird die Erfindung anhand von Figuren näher erläutert. Dabei zeigen:
- Fig. 1: eine schematische Darstellung eines Kabelbaums;
- Fig. 2: eine schematische Darstellung des in Fig. 1 gezeigten Kabelbaums;
- Fig. 3: eine perspektivische Darstellung eines in Fig. 2 gezeigten Routerclips des in den Figuren 1 und 2 gezeigten Kabelbaums;
- Fig. 4: eine schematische perspektivische Darstellung einer Form zur Herstellung des in Fig. 1 gezeigten Kabelbaums;
- Fig. 5: eine Schnittansicht entlang einer in Fig. 4 gezeigten Schnittebene A-A durch das in Fig. 4 gezeigte erste Formteil der Form;
- Fig. 6: eine Schnittansicht entlang einer in Fig. 1 gezeigten Schnittebene B-B durch den in Figur 1 gezeigten Kabelbaum;
- Fig. 7: ein Ablaufdiagramm eines Verfahrens zur Herstellung des in Fig. 1 gezeigten Kabelbaums;
- Fig. 8: eine perspektivische Ansicht entlang der Form mit eingesetztem Routerclip während eines dritten Verfahrensschritts; und
- Fig. 9: einen Ausschnitt einer perspektivischen Ansicht des Kabelbaums nach einem neunten Verfahrensschritts.

Zum verbesserten Verständnis wird in den nachfolgenden Figuren auf ein Koordinatensystem Bezug genommen. Das Koordinatensystem ist beispielhaft als Rechtssystem ausgebildet und weist eine x-Achse (Längsrichtung), eine y-Achse (Querrichtung) und eine z-Achse (Höhenrichtung) auf.

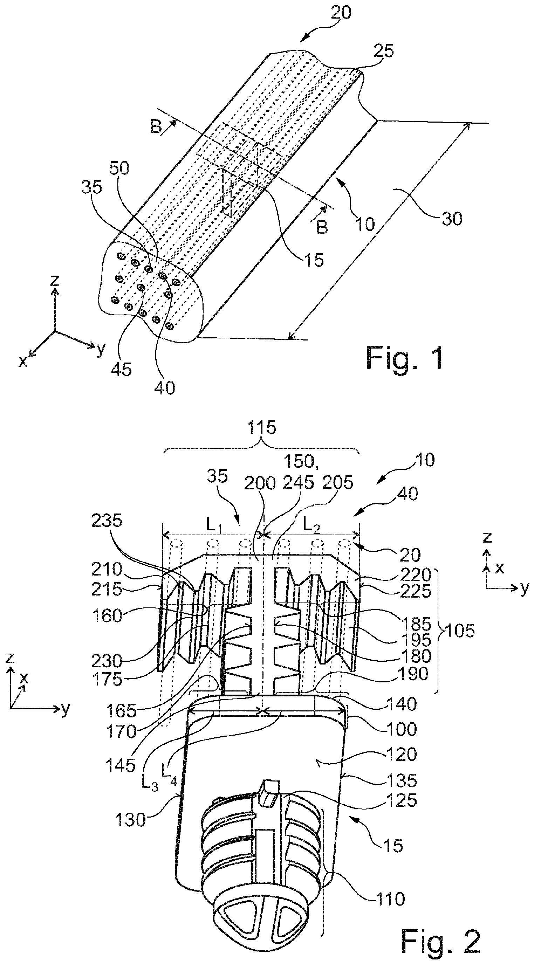

Fig. 1 zeigt eine schematische Darstellung eines Kabelbaums 10.

Der Kabelbaum 10 weist einen Routerclip 15, eine Kabelanordnung 20 und eine Ummantelung 25 auf. Der Routerclip 15 befestigt den Kabelbaum 10 an einer Komponente 30 eines Kraftfahrzeugs. Die Komponente 30 kann beispielsweise ein Karosseriebauteil des Kraftfahrzeugs sein. Auch kann die Komponente 30 beispielsweise ein Gehäuse eines Steuergeräts, ein Antriebsmotor oder ein elektrischer Energiespeicher sein.

Die Kabelanordnung 20 weist wenigstens ein erstes elektrisches Kabel 35 und ein zweites elektrisches Kabel 40 auf. Insbesondere kann die Kabelanordnung 20 eine Vielzahl von ersten und zweiten elektrischen Kabeln 35, 40 aufweisen. Das erste und zweite elektrische Kabel 35, 40 können identisch oder unterschiedlich zueinander ausgebildet sein. Die Kabelanordnung 20 und insbesondere das erste und zweite elektrische Kabel 35, 40 erstrecken sich im Wesentlichen entlang der x-Achse.

Dabei kann das elektrische Kabel 35, 40 beispielsweise zur Übertragung von elektrischen Signalen im Rahmen einer Datenübertragung oder zur Übertragung von elektrischer Energie zum Antrieb einer elektrischen Komponente 30 des Kraftfahrzeugs ausgebildet sein. Das elektrische Kabel 35, 40 weist jeweils einen elektrischen Leiter 45 und eine Kabelummantelung 50 auf, wobei die Kabelummantelung 50 den elektrischen Leiter 45 elektrisch isoliert und umfangsseitig umschließt. Der elektrische Leiter 45 ist ausgebildet, jeweils das elektrische Signal oder die elektrische Energie zu übertragen.

Die Ummantelung 25 umschließt die elektrischen Kabel 35, 40, vorzugsweise vollständig, sodass das erste und zweite elektrische Kabel 35, 40 der Kabelanordnung 20 in der Ummantelung 25 eingebettet ist. Die Ummantelung 25 weist vorzugsweise einen Schaumwerkstoff auf, in dem die Kabelanordnung 20, vorzugsweise vollständig, eingebettet ist. Der Schaumwerkstoff weist wenigstens einen der folgenden ersten Werkstoffe auf: Polyurethan, offenporigen Schaum, geschlossenporigen Schaum, gemischtporigen Schaum, Polymers, Polymer-Filler Matrices. Durch die Ummantelung 25 ist das elektrische Kabel 35, 40 mechanisch vor einer Beschädigung geschützt. Ferner verbindet die Ummantelung 25 stoffschlüssig die elektrischen Kabel 35, 40 der Kabelanordnung 20 zu einem Kabelbündel. Ferner verbindet die Ummantelung 25 den zumindest teilweise in der Ummantelung 25 einbetteten Routerclip 15 stoffschlüssig mit der Kabelanordnung 20. Durch das Einbetten des Routerclips 15 in die Ummantelung 25 wird ein sicherer Halt des Routerclips 15 an der Kabelanordnung 20 sichergestellt und dadurch eine zuverlässige Befestigung des Kabelbaums 10 mittels des Routerclips 15 an der Komponente 30 sichergestellt.

Fig. 2 zeigt eine schematische Darstellung des in Fig. 1 gezeigten Kabelbaums 10.

Dabei wird in Fig. 2 nur ein kleiner Teil der elektrischen Kabel 35, 40 der Kabelanordnung 20 dargestellt. Ebenso wird auf die Darstellung der Ummantelung 25 aus Übersichtlichkeitsgründen verzichtet. Der Kabelbaum 10 ist im Bereich des Routerclips 15 dargestellt.

Der Routerclip 15 weist einen Halter 100, einen Verbindungsabschnitt 105, einen Befestigungsabschnitt 110 und einen Gegenhalter 115 auf. Der Routerclip 15 ist in der Ausführungsform einstückig und materialeinheitlich ausgebildet. Dabei kann der Routerclip 15 beispielsweise mittels eines Spritzgussverfahrens oder eines 3D-Drucks hergestellt werden. Vorzugsweise weist der Routerclip 15 wenigstens einen der folgenden zweiten Werkstoffe auf: Polyamid, Polypropylen, Polyethylen, Polypropylen mit einem Copolymer, beispielsweise Polyethylenterephthalat, Biopolymer, Polylactid, Faserverbundkunststoff. Die einstückige und materialeinheitliche Ausgestaltung des Routerclips 15 hat den Vorteil, dass der Routerclip 15 besonders einfach und kostengünstig in Großserie hergestellt werden kann.

Der Halter 100 ist vorzugsweise im Wesentlichen plattenförmig ausgebildet. Der Halter 100 weist vorzugsweise eine im Wesentlichen konstante Wandstärke in z-Richtung auf. In einer Unteransicht ist der Halter 100 im Wesentlichen mit rechteckförmiger Ausgestaltung ausgebildet.

Der Halter 100 erstreckt sich beispielsweise im Wesentlichen in einer xy-Ebene. Der Halter 100 weist eine erste Anlagefläche 120 auf. Die erste Anlagefläche 120 ist auf einer dem Befestigungsabschnitt 110 zugewandten Seite des Halters 100 angeordnet. Dabei kann bezogen auf eine Erstreckung der ersten Anlagefläche 120 in x- und/oder in y-Richtung der Befestigungsabschnitt 110 in mittiger Position an der ersten Anlagefläche 120 positioniert sein. Der Befestigungsabschnitt 110 ragt beispielsweise in z-Richtung über die erste Anlagefläche 120 und ist an einem ersten festen Ende 125 mit dem Halter 100 verbunden. Vorzugsweise kann der Befestigungsabschnitt 110 in seiner Haupterstreckungsrichtung geneigt, vorzugsweise senkrecht, zu der ersten Anlagefläche 120 ausgerichtet sein.

Der Halter 100 weist ferner eine erste Seitenfläche 130 und eine in Querrichtung zur ersten Seitenfläche 130 gegenüberliegend angeordnete zweite Seitenfläche 135 auf. Die erste Seitenfläche 130 und die zweite Seitenfläche 135 können parallel zueinander verlaufend ausgerichtet sein. Dabei können die erste und/oder zweite Seitenfläche 130, 135 in jeweils einer xz-Ebene verlaufend ausgebildet sein. Beispielhaft ist die erste Seitenfläche 130 und/oder die zweite Seitenfläche 135 plan ausgebildet.

Der Halter 100 weist auf einer der ersten Anlagefläche 120 abgewandten Seite eine zweite Anlagefläche 140 auf. Die zweite Anlagefläche 140 ist vorzugsweise plan ausgebildet. Auch eine andere Ausgestaltung der zweiten Anlagefläche 140 wäre denkbar. In der Ausführungsform verläuft beispielhaft die zweite Anlagefläche 140 in einer xy-Ebene.

Der Verbindungsabschnitt 105 ist an einem zweiten festen Ende 145 an der zweiten Anlagefläche 140 mit dem Halter 100 verbunden. Der Verbindungsabschnitt 105 ist beispielsweise geneigt, vorzugsweise senkrecht, zu der zweiten Anlagefläche 140 ausgerichtet. In Längsrichtung können der Verbindungsabschnitt 105 und der Halter 100 im Wesentlichen die gleiche Längserstreckung aufweisen.

In der Ausführungsform erstreckt sich der Verbindungsabschnitt 105 vorzugsweise entlang einer Geraden 150. Die Gerade 150 verläuft vorzugsweise parallel zur z-Achse. In der Ausführungsform ist die Gerade 150 geneigt, vorzugsweise senkrecht zu dem Halter 100, insbesondere zu der ersten und zweiten Anlagefläche 120, 140, ausgerichtet. Selbstverständlich wäre es auch möglich, dass der Verbindungsabschnitt 105 gekrümmt ausgebildet ist.

Gegenüberliegend zum zweiten festen Ende 145 ist der Verbindungsabschnitt 105 an einem dritten festen Ende 200 mit dem Gegenhalter 115 verbunden. Der Halter 100, der Gegenhalter 115 und der Verbindungsabschnitt 105 weisen eine in der Seitenansicht im Wesentlichen doppel-T-förmige Ausgestaltung auf. Der Verbindungsabschnitt verbindet somit den Gegenhalter 115 mit dem Halter 100. Der Gegenhalter 115 überragt mit einem ersten Gegenhalterabschnitt 160 eine erste Querseite 165 des Verbindungsabschnitts 105 in Querrichtung. Ebenso überragt ein erster Halterabschnitt 170 des Halters 100 die erste Querseite 165 in Querrichtung. Der erste Gegenhalterabschnitt 160, die erste Querseite 165 und der erste Halterabschnitt 170 begrenzen einen ersten Aufnahmeraum 175. Dabei wird in z-Richtung der erste Aufnahmeraum 175 durch den ersten Gegenhalterabschnitt 160 und den ersten Halterabschnitt 170 begrenzt. In Querrichtung gegenüberliegend zu der ersten Querseite 165 ist der erste Aufnahmeraum 175 in Fig. 2 offen ausgebildet. Ebenso ist beidseitig in Längsrichtung der erste Aufnahmeraum 175 offen.

In Querrichtung gegenüberliegend zur ersten Querseite 165 weist der Verbindungsabschnitt 105 eine zweite Querseite 180 auf. Ein zweiter Gegenhalterabschnitt 185 überragt in Querrichtung die zweite Querseite 180 in eine zum ersten Gegenhalterabschnitt 160 abgewandte Querrichtung. Dabei können in Querrichtung der erste Gegenhalterabschnitt 160 und der zweite Gegenhalterabschnitt 185 eine im Wesentlichen identische Erstreckung in Querrichtung aufweisen.

In z-Richtung gegenüberliegend zu dem zweiten Gegenhalterabschnitt 185 weist der Halter 100 einen zweiten Halterabschnitt 190 auf. Der zweite Halterabschnitt 190 überragt in Querrichtung auf einer zum ersten Halterabschnitt 170 abgewandten Seite und in eine zum ersten Halterabschnitt 170 abgewandte Querrichtung die zweite Querseite 180. Der zweite Halterabschnitt 190, die zweite Querseite 180 und der zweite Gegenhalterabschnitt 185 begrenzen einen zweiten Aufnahmeraum 195. Der zweite Aufnahmeraum 195 ist in beide Längsrichtungen offen ausgebildet. Seitlich gegenüberliegend zu der zweiten Querseite 180 des Verbindungsabschnitts 105 ist in Fig. 2 der zweite Aufnahmeraum 195 offen.

Der erste Gegenhalterabschnitt 160 ist an dem dritten festen Ende 200 mit dem Verbindungsabschnitt 105 verbunden. An einem vierten festen Ende 205 des zweite Gegenhalterabschnitt 185, das sich in Querrichtung an das dritte feste Ende 200 des ersten Gegenhalterabschnitts 160 anschließt, ist der zweite Gegenhalterabschnitt 185 mit dem Verbindungsabschnitt 105 verbunden.

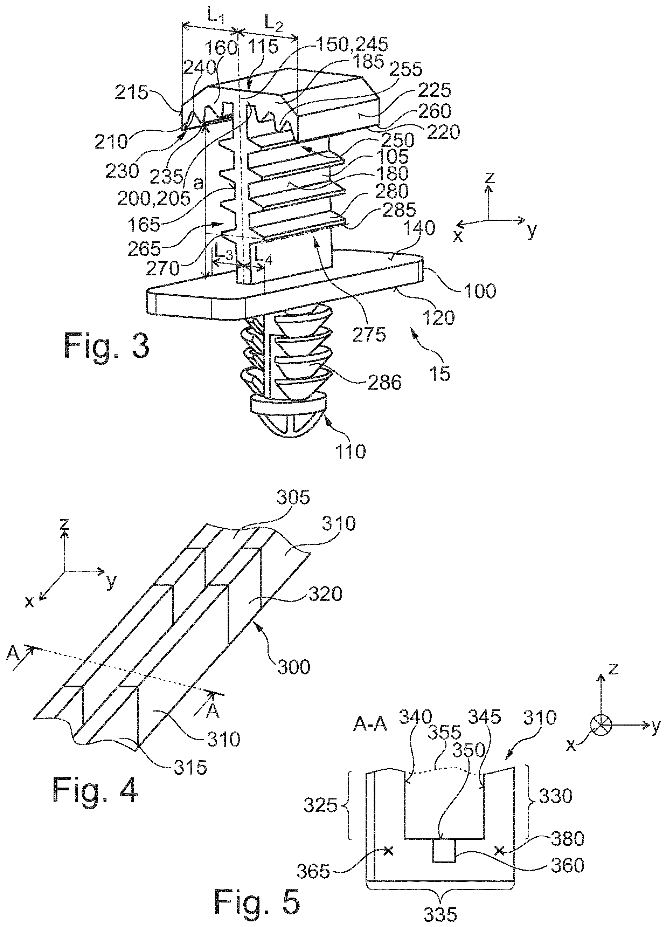

Fig. 3 zeigt eine perspektivische Darstellung des in Fig. 2 gezeigten Routerclips 15.

Der erste Gegenhalterabschnitt 160 weist in Querrichtung auf einer dem dritten festen Ende 200 abgewandten Seite ein erstes freies Ende 210 auf. In Querrichtung kann an dem ersten freien Ende 210 eine dritte Seitenfläche 215 angeordnet sein. Die dritte Seitenfläche 215 kann beispielsweise in nicht montiertem Zustand des Routerclips 15 als xz-Ebene ausgebildet sein und somit parallel zu der ersten Seitenfläche 130 ausgerichtet sein.

In der Ausführungsform ist der erste Gegenhalterabschnitt 160 derart ausgebildet, dass ein Abstand a zwischen dem ersten Gegenhalterabschnitt 160 und der zweiten Anlagefläche 140 von dem dritten festen Ende 200 hin zum ersten freien Ende 210 abnimmt. Mit anderen Worten ist das erste freie Ende 210 in Richtung der zweiten Anlagefläche 140 des Halters 100 in z-Richtung verglichen mit dem dritten festen Ende 200 hin versetzt. Dies bewirkt, dass der erste Aufnahmeraum 175 in Querrichtung von der ersten Querseite 165 in Richtung der dritten Seitenfläche 215 verjüngend ausgebildet ist.

In der Ausführungsform ist in Querrichtung der erste Gegenhalterabschnitt 160 länger ausgebildet als der erste Halterabschnitt 170.

In der Ausführungsform ist beispielhaft der Routerclip 15 spiegelsymmetrisch bezogen auf die Symmetrieebene in der die Gerade 150 verläuft, ausgebildet. Selbstverständlich wäre es auch möglich, dass der Routerclip 15 auch asymmetrisch ausgebildet ist.

In der Ausführungsform erstreckt sich der zweite Gegenhalterabschnitt 185 vom vierten festen Ende 205 hin zu einem zweiten freien Ende 220. Am zweiten freien Ende 220 ist eine vierte Seitenfläche 225 angeordnet, die beispielhaft plan ausgebildet ist. Ebenso ist das zweite freie Ende 220 gegenüber dem vierten festen Ende 205 in Richtung der zweiten Anlagefläche 140 hin in z-Richtung hin versetzt. Dies bedeutet, dass vom vierten festen Ende 205 hin zum zweiten freien Ende 220 der Abstand a zwischen dem zweiten Gegenhalterabschnitt 185 und der zweiten Anlagefläche 140 abnimmt.

In Querrichtung ist der zweite Gegenhalterabschnitt 185 länger ausgebildet als der zweite Halterabschnitt 190, sodass der zweite Gegenhalterabschnitt 185 den zweiten Halterabschnitt 190 in Querrichtung überragt. Dabei kann eine erste Breite L1 des ersten Gegenhalterabschnitts 160 identisch zu einer zweiten Breite L2 des zweiten Gegenhalterabschnitts 185 sein. Die erste Breite L1 ist dabei größer als eine dritte Breite L3 des ersten Halterabschnitts 170 und/oder die zweite Breite L2 ist größer als eine vierte Breite L4 des zweiten Halterabschnitts 190 in Querrichtung.

Beispielhaft weist auf einer dem ersten Halterabschnitt 170 zugewandten Seite der erste Gegenhalterabschnitt 160 eine erste Verzahnung 230 auf. Die erste Verzahnung 230 ist derart ausgebildet, dass erste Zähne 235 der ersten Verzahnung 230 sich parallel zur Längsachse und zur ersten Querseite 165 erstrecken. Die erste Verzahnung 230 ist dabei als Geradverzahnung ausgebildet.

Auf die erste Verzahnung 230 kann auch verzichtet werden. Von besonderem Vorteil ist, wenn an dem ersten freien Ende 210 ein erster Zahnkopf 240 an die dritte Seitenfläche 215 angrenzt, sodass der Abstand a zwischen dem Gegenhalter 115 und der zweiten Anlagefläche 140 am ersten freien Ende 210 in z-Richtung besonders gering ist.

Durch die beispielhafte symmetrische Ausgestaltung des Routerclips 15 bezüglich einer Symmetrieebene, die durch die Gerade 150 aufgespannt wird, weist beispielhaft der zweite Gegenhalterabschnitt 185 auf der zum Halter 100 zugewandten Seite eine zweite Verzahnung 250 auf. Die zweite Verzahnung 250 ist beispielhaft als Geradverzahnung ausgebildet. Dadurch verläuft ein zweiter Zahn 255 der zweiten Verzahnung 250 parallel zur x-Achse und somit beispielhaft parallel zur zweiten Querseite 180. Ebenso ist vorteilhafterweise ein zweiter Zahnkopf 260 angrenzend an die vierte Seitenfläche 225 angeordnet. Der zweite Zahnkopf 260 sorgt dafür, dass an dem zweiten freien Ende 220 der Abstand a zwischen der zweiten Anlagefläche 140 und dem zweiten Gegenhalterabschnitt 185 geringer ist als an dem vierten festen Ende 205.

Zusätzlich kann an der ersten Querseite 165 eine dritte Verzahnung 265 vorgesehen sein. Die dritte Verzahnung 265 weist wenigstens einen, vorzugsweise mehrere, parallel zueinander verlaufende dritte Zähne 270 auf. Die dritte Verzahnung 265 ist als Geradverzahnung beispielhaft ausgebildet. Dabei können beispielsweise die dritten Zähne 270 soweit in z-Richtung beabstandet voneinander angeordnet sein, dass die erste Querseite 165 zwischen den dritten Zähnen 270 plan ausgebildet ist. In der Seitenansicht des Routerclips 15 kann beispielsweise der erste bis dritte Zahn 235, 255, 270 einen dreiecksförmigen Querschnitt aufweisen. Die Ausgestaltung des dritten Zahns 270 kann im Wesentlichen dem ersten Zahn 235 entsprechen. Der dritte Zahn 270 ist dabei derart an der ersten Querseite 165 angeordnet, dass der dritte Zahn 270 parallel zu der zweiten Anlagefläche 140 verläuft.

Zusätzlich ist beispielhaft an der zweiten Querseite 180 eine vierte Verzahnung 275 ausgebildet. Die vierte Verzahnung 275 weist einen, vorzugsweise mehrere, in z-Richtung versetzt zueinander angeordnete vierte Zähne 280 auf. In der Ausführungsform sind beispielhaft die dritte Verzahnung 265 und die vierte Verzahnung 275 identisch zueinander ausgebildet. Die vierte Verzahnung 275 ist beispielhaft als Geradverzahnung ausgebildet. Dabei sind die vierten Zähne 280 in z-Richtung so weit voneinander beabstandet angeordnet, dass die zweite Querseite 180 zwischen den vierten Zähnen 280 plan ausgebildet ist. Der vierte Zahn 280 kann in der Seitenansicht eine dreiecksförmige Ausgestaltung aufweisen. Der vierte Zahn 280 erstreckt sich vorzugsweise parallel zu der zweiten Anlagefläche 140. Vorzugsweise sind in z-Richtung der dritte Zahn 270 und der vierte Zahn 280 jeweils in einer gemeinsamen Ebene 285 angeordnet.

In der Ausführungsform sind vorzugsweise die dritten Zähne 270 und/oder die vierten Zähne 280 in regelmäßigem Abstand in z-Richtung angeordnet.

Auf die Anordnung einer Verzahnung wird an der zweiten Anlagefläche 140 verzichtet. Selbstverständlich wäre es auch möglich, dass an der zweiten Anlagefläche 140 ebenso eine Verzahnung angeordnet ist. Die Ausgestaltung wäre dabei im Wesentlichen identisch zu der dritten Verzahnung 265 an der zweiten Anlagefläche 140.

Der Befestigungsabschnitt 110, der auf einer zum Verbindungsabschnitt 105 abgewandten Seite am Halter 100 angeordnet ist, weist mehrere Befestigungslamellen 286 auf. Der Befestigungsabschnitt 110 erstreckt sich in eine vom Verbindungsabschnitt 105 abgewandte Richtung von der ersten Anlagefläche 120 weg und überragt die erste Anlagefläche 120. In der Ausführungsform ist beispielhaft in Längsrichtung und in Querrichtung der Halter 100 breiter ausgebildet als der Befestigungsabschnitt 110. Die Befestigungslamelle 286 ist beispielsweise schräg geneigt in Richtung der ersten Anlagefläche 120 ausgerichtet.

In einer Unteransicht kann der Befestigungsabschnitt 110 beispielhaft kreisförmig ausgebildet sein. Der Befestigungsabschnitt 110 ist ausgebildet, in montiertem Zustand eine Komponentenöffnung 295 in der Komponente 30 zu durchgreifen und mittels der Befestigungslamelle 286, die Komponente 30 zu hintergreifen.

Fig. 4 zeigt eine schematische perspektivische Darstellung einer Form 300 zur Herstellung des in Fig. 1 gezeigten Kabelbaums 10.

Die Form 300 ist in der Ausführungsform beispielhaft als offene Form ausgebildet. Dabei wird unter einer offenen Form verstanden, dass ein Formraum 305, der durch die Form 300 begrenzt wird und zur Herstellung des Kabelbaums 10 dient, in zumindest eine Richtung offen ist und ein Austritt der Ummantelung 25 bei Herstellung des Kabelbaums 10 aus dem Formraum 305 möglich ist.

Die Form 300 weist wenigstens ein erstes Formteil 310 und beispielhaft ein zweites Formteil 315 auf. Zusätzlich kann die Form 300 ein drittes Formteil 320 aufweisen. Das erste Formteil 310 ist in Längsrichtung zwischen dem zweiten Formteil 315 und dem dritten Formteil 320 angeordnet. Dabei schließt sich das erste Formteil 310 direkt an das zweite Formteil 315 an einem ersten Längsende und an das dritte Formteil 320 an einer zum ersten Längsende gegenüberliegenden zweiten Längsseite direkt an. Das erste Formteil 310 weist wenigstens einen der folgenden dritten Werkstoffe auf: Silikon, Kautschuk.

Das zweite Formteil 315 und/oder das dritte Formteil 320 weisen vorzugsweise einen vierten Werkstoff auf, der eine geringere Elastizität aufweist als der dritte Werkstoff. Dabei ist von Vorteil, wenn das zweite Formteil 315 und/oder das dritte Formteil 320 im Wesentlichen starr ausgebildet sind. Vorzugweise weist das zweite Formteil 315 und/oder das dritte Formteil 320 wenigstens einen der folgenden vierten Werkstoffe auf: Polytetrafluorethylen (PTFE), Polyethylen (PE), Polypropylen (PP), Polyoxymethylen (POM).

Fig. 5 zeigt eine Schnittansicht entlang einer in Fig. 4 gezeigten Schnittebene A-A durch das in Fig. 4 gezeigte erste Formteil 310 der Form 300 in einem ersten Zustand.

Das erste Formteil 310 weist einen ersten Wandungsabschnitt 325, einen zweiten Wandungsabschnitt 330 und einen Bodenabschnitt 335 auf. Der zweite Wandungsabschnitt 330 ist in Querrichtung gegenüberliegend zum ersten Wandungsabschnitt 325 angeordnet. Der erste Wandungsabschnitt 325 und der zweite Wandungsabschnitt 330 schließen sich oberseitig in z-Richtung an den Bodenabschnitt 335 an, der in der Ausführungsform beispielhaft plattenförmig ausgebildet ist. Das erste Formteil 310 im Wesentlichen einen U-förmigen Querschnitt aufweist. Innenseitig begrenzt der erste Wandungsabschnitt 325 mit einer zum Formraum 305 zugewandten ersten Wandungsseitenfläche 340 den Formraum 305 in Querrichtung. In Querrichtung gegenüberliegend zur ersten Wandungsseitenfläche 340 begrenzt mit einer zweiten Wandungsseitenfläche 345 der zweite Wandungsabschnitt 330 den Formraum 305. Unterseitig wird der Formraum 305 durch den Bodenabschnitt 335 und einen in der Ausführungsform beispielhaft plan ausgebildeten Formgrund 350 begrenzt. Der Formraum 305 ist auf der zum Formgrund 350 abgewandten Seite offen ausgebildet und weist eine Einlegeöffnung 355 auf. Die Einlegeöffnung 355 ist in Fig. 5 schematisch mittels einer strichlierten Linie dargestellt. In der Ausführungsform sind beispielhaft jeweils der Formgrund 350, die erste Wandungsseitenfläche 340 und die zweite Wandungsseitenfläche 345 in einem ersten Zustand des ersten Formteils 310 plan ausgebildet.

Zusätzlich ist in dem Bodenabschnitt 335 eine Aufnahme 360 angeordnet, wobei die Aufnahme 360 im Wesentlichen einer äußeren Hüllkontur des Befestigungsabschnitts 110 entsprechen kann. Die Aufnahme 360 kann nach unten hin geschlossen in dem Bodenabschnitt 335 ausgebildet sein. Es wäre auch möglich, dass die Aufnahme 360 in dem Bodenabschnitt 335 auf einer zum Formraum 305 abgewandten Seite offen ausgebildet ist, sodass die Aufnahme 360 als Durchgangsöffnung in dem Bodenabschnitt 335 ausgebildet ist.

Das erste Formteil 310 ist einstückig und materialeinheitlich aus dem dritten Werkstoff ausgebildet. Insbesondere kann beispielsweise das erste Formteil 310 gegossen, insbesondere spritzgegossen sein. In Fig. 5 ist der erste Wandungsabschnitt 325 in einer ersten Halteposition und der zweite Wandungsabschnitt 330 in einer zweiten Halteposition dargestellt. In der ersten und zweiten Halteposition verlaufen der erste Wandungsabschnitt 325 und der zweite Wandungsabschnitt 330 beispielhaft parallel zueinander. In der ersten Halteposition ist der erste Wandungsabschnitt 325 entlastet. In der zweiten Halteposition ist der zweite Wandungsabschnitt 330 entlastet. Dabei wird unter Entlastung verstanden, dass keine zusätzlichen Spannkräfte auf den jeweiligen Wandungsabschnitt 325, 330 wirken.

In der ersten Halteposition ist beispielhaft der erste Wandungsabschnitt 325 wie in Fig. 5 gezeigt, geneigt, beispielsweise senkrecht, mit der ersten Wandungsseitenfläche 340 zu dem Formgrund 350 ausgerichtet. Ebenso kann in der zweiten Halteposition der zweite Wandungsabschnitt 330 mit der zweiten Wandungsseitenfläche 345 beispielhaft geneigt, insbesondere senkrecht zu dem Formgrund 350 ausgerichtet sein.

Vorteilhafterweise enden der erste Wandungsabschnitt 325 und der zweite Wandungsabschnitt 330 in z-Richtung beispielhaft auf gleicher Höhe. Die Einlegeöffnung 355 kann in y-Richtung die gleiche Breite aufweisen wie der Formgrund 350.

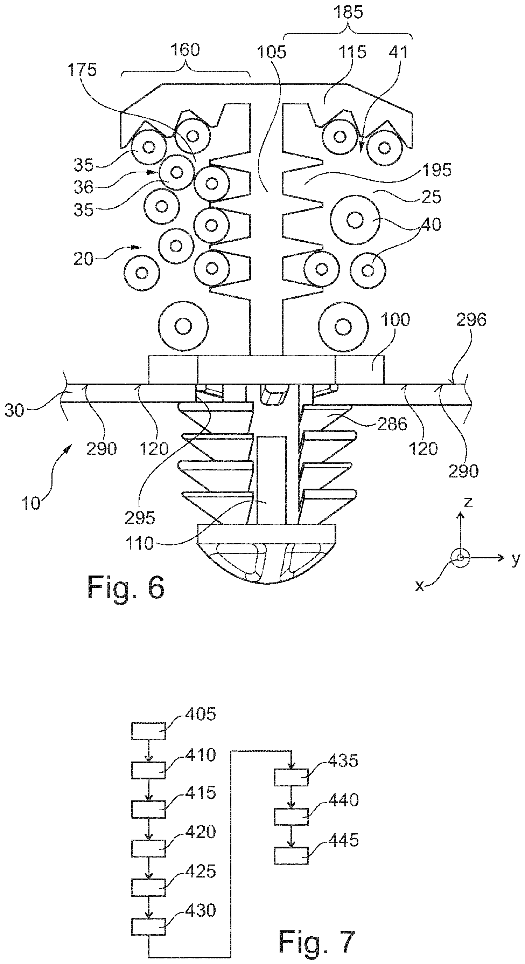

Fig. 6 zeigt eine Schnittansicht entlang einer in Fig. 1 gezeigten Schnittebene B-B durch den Kabelbaum 10.

In fertiggestelltem Zustand des Kabelbaums 10 ist die Kabelanordnung 20 im Wesentlichen durch die Ummantelung 25 ummantelt und in dem Schaumwerkstoff der Ummantelung 25 eingebettet. Ebenso ist der Verbindungsabschnitt 105, vorzugsweise vollständig, sowie der Gegenhalter 115, zumindest an der zum Halter 100 zugewandten Seite, in die Ummantelung 25 eingebettet. Vorzugsweise umschließt die Ummantelung 25, wie in Fig. 1 gezeigt, den Gegenhalter 115 vollständig. Eine dem Befestigungsabschnitt 110 zugewandte fünfte Seitenfläche 290 der Ummantelung 25 kann im Wesentlichen plan ausgebildet sein und bündig mit der ersten Anlagefläche 120 des Halters 100 abschließen. Der Befestigungsabschnitt 110 ist nicht durch die Ummantelung 25 umschlossen und ragt über die fünfte Seitenfläche 290.

Ein erster Teil 36 der Kabelanordnung 20 verläuft durch den ersten Aufnahmeraum 175. Insbesondere können im ersten Aufnahmeraum 175 mehrere, im Wesentlichen parallel zueinander verlaufende erste elektrische Kabel 35 den ersten Aufnahmeraum 175 durchgreifen. Die ersten Kabel 35 können beispielsweise, wie in Fig. 6 schematisch dargestellt, unterschiedliche Außendurchmesser, aber auch unterschiedliche Leitungsquerschnitte aufweisen. Die ersten Kabel 35 können dabei sowohl Daten, aber auch elektrische Ströme zum Antrieb von Komponenten des Kraftfahrzeugs übertragen.

Ein zweiter Teil 41 der Kabelanordnung 20, der ein oder mehrere zweite Kabel 40 aufweisen kann, ist durch den zweiten Aufnahmeraum 195 geführt und durchgreift den zweiten Aufnahmeraum 195 in Längsrichtung. Die Verzahnung 230, 250, 265, 275 kann zwischen die einzelnen Kabel 35, 40 der Kabelanordnung 20 eingreifen und eine ungewollte Verschiebung in y- und/oder z-Richtung verhindern. Ferner vergrößert die Verzahnung 230, 250, 265, 275 eine Kontaktoberfläche des Routerclips 15, an der der Routerclip 15 stoffschlüssig mit der Ummantelung 25 verbunden ist. Insbesondere am Verbindungsabschnitt 105 und der dem Halter 100 zugewandten Seite des Gegenhalters 115 kann eine besonders große Zugkraft in z-Richtung weg vom Verbindungsabschnitt in Richtung dem Befestigungsabschnitt 110 wirkend zwischen der Kabelanordnung 20 über die Ummantelung 25 und dem Routerclip 15 ausgetauscht werden.

Von besonderem Vorteil ist hierbei, wenn der Gegenhalter 115 so steif ausgebildet ist, dass ein Aufbiegen des ersten Gegenhalterabschnitts 160 und des zweiten Gegenhalterabschnitts 185, in Fig. 6 mittels Pfeile schematisch angedeutet, im Wesentlichen vermieden werden kann.

Der Befestigungsabschnitt 110 durchgreift in montiertem Zustand des Kabelbaums 10 an der Komponente 30 die Komponentenöffnung 295. Die Komponentenöffnung 295 und der Befestigungsabschnitt 110, insbesondere die Befestigungslamellen 286, sind derart korrespondierend zueinander ausgebildet, dass die Befestigungslamelle 286 die Komponente 30 hintergreift.

In der Ausführungsform liegt in montiertem Zustand die erste Anlagefläche 120 des Halters 100 an einer Komponentenseitenfläche 296 der Komponente 30 flächig an. Die Komponentenseitenfläche 296 ist vorzugsweise plan ausgebildet, sodass ebenso die an die erste Anlagefläche 120 anschließende fünfte Seitenfläche 290 der Ummantelung 25 ebenso an der Komponentenseitenfläche 296 anliegt.

Diese Ausgestaltung hat den Vorteil, dass mittels des Routerclips 15 zum einen die Kabelanordnung 20 in der Ummantelung 25 zusätzlich fixiert ist und beispielsweise ein Verrutschen der elektrischen Kabel 35, 40, auch wenn an den elektrischen Kabeln 35, 40 zum Beispiel in z-Richtung gezogen werden würde, verhindert wird. Zum anderen stellt die stoffschlüssige Verbindung zwischen Routerclip 15 und der Ummantelung 25 zusätzlich sicher, dass die Kabelanordnung 20 besonders gut und fest über dem Befestigungsabschnitt 110 des Routerclips 15 an der Komponente 30 fixiert ist.

Von besonderem Vorteil ist, wenn mehrere Routerclips 15, wie der in den Figuren 1 bis 3, 6 gezeigte Routerclip 15, in der Ummantelung 25 in Abständen in Längsrichtung angeordnet sind, um den Kabelbaum 10 an der Komponente 30 des Fahrzeugs zu fixieren. Der Routerclip 15 hat zusätzlich den Vorteil, dass durch eine einfache Steckbewegung in z-Richtung der Routerclip 15 die Verbindung zu der Komponente 30 des Fahrzeugs herstellt. Weitere Montageschritte sind in der Montage des Kabelbaums 10 an der Komponente 30 nicht notwendig.

Durch den besonders guten stoffschlüssigen Halt des Routerclips 15 mittels des Verbindungsabschnitts 105 und des Gegenhalters 115 in der Ummantelung 25 kann auf zusätzliche Befestigungsmittel zur Verbindung des Routerclips 15 mit der Kabelummantelung 50 und/oder Kabelanordnung 20, beispielsweise auf Tapes, verzichtet werden. Durch die Herstellung des Routerclips 15 aus zumindest einem der genannten zweiten Werkstoffen kann eine besonders gute stoffschlüssige Verbindung zwischen dem Schaumwerkstoff der Ummantelung 25 einerseits und dem Routerclip 15 andererseits sichergestellt werden.

Durch die nach unten hin versetzten freien Enden 210, 220 wird ein ungewolltes Herausrutschen und ein sicherer Halt des jeweiligen Teils 36, 41 der Kabelanordnung 20 sichergestellt werden und auch eine Retention des Routerclips 15 selbst auf die Kabelanordnung 20 erhöht werden. Auch können von dem Routerclip 15 Kabel mit unterschiedlicher Größe, insbesondere Querschnittsfläche, zuverlässig in der Ummantelung 25 gehalten werden.

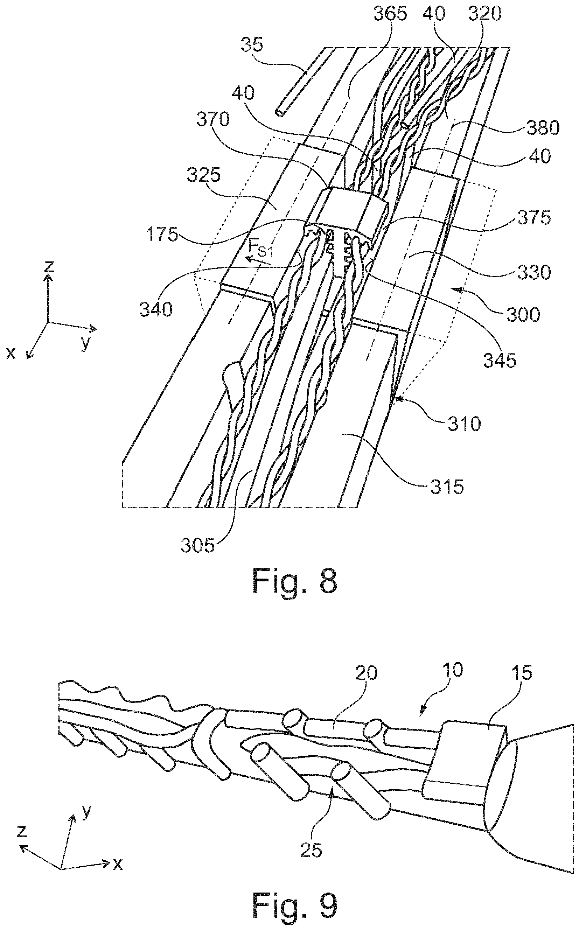

Fig. 7 zeigt ein Ablaufdiagramm eines Verfahrens zur Herstellung des in Fig. 1 gezeigten Kabelbaums 10. Fig. 8 zeigt eine perspektivische Ansicht entlang der Form 300 mit eingesetztem Routerclip 15 während eines dritten Verfahrensschritts 415. Fig. 9 zeigt einen Ausschnitt einer perspektivische Ansicht des Kabelbaums 10 nach einem neunten Verfahrensschritts 445.

In einem ersten Verfahrensschritt 405 wird die in den Figuren 4 und 5 gezeigte Form 300 bereitgestellt.

In einem auf den ersten Verfahrensschritt 405 folgenden zweiten Verfahrensschritt 410 wird ein Routerclip 15 in z-Richtung von oben in das erste Formteil 310 derart eingeführt, dass der Befestigungsabschnitt 110 des Routerclips 15 in die Aufnahme 360 eingreift und die erste Anlagefläche 120 auf dem Formgrund 350 aufliegt.

Vorzugsweise weist die Form 300 mehrere in Längsrichtung beabstandet zueinander angeordnete erste Formteile 310 auf, wobei zumindest in jedes weitere erste Formteil 310 jeweils wenigstens ein Routerclip 15 mit dem Befestigungsabschnitt 110 in z-Richtung voran in die Aufnahme 360 derart eingesteckt wird, dass die erste Anlagefläche 120 am Formgrund 350 anliegt. Die in den Formraum 305 des ersten Formteils 310 eingesetzten Routerclips 15 sind in Längsrichtung beabstandet zueinander angeordnet, sodass nach dem zweiten Verfahrensschritt 410 der zwischen den Routerclips 15 liegende Teil des Formraums 305 offen und unbelegt ist.

Ein zweiter Abstand der ersten Wandungsseitenfläche 340 zu der zweiten Wandungsseitenfläche 345 kann derart gewählt sein, dass ein schmaler erster Spalt 370 zwischen dem ersten freien Ende 210 und der ersten Wandungsseitenfläche 340 in der ersten Halteposition vorgesehen ist. Der erste Spalt 370 ist vorzugsweise kleiner als ein Durchmesser des kleinsten Kabels 35, 40 der Kabelanordnung 20. Auch kann in der ersten Halteposition die erste Wandungsseitenfläche 340 an der dritten Seitenfläche 215 anliegen. Analog kann in der zweiten Halteposition des zweiten Wandungsabschnitts 330 zwischen der zweiten Wandungsseitenfläche 345 und der vierten Seitenfläche 225 ein zweiter Spalt 375 ausgebildet sein. Der zweite Spalt 375 ist vorzugsweise kleiner als ein maximaler Außendurchmesser des kleinsten Kabels 35, 40, insbesondere des zweiten Teils 41 der Kabelanordnung 20.

Im dritten Verfahrensschritt 415 (vgl. Fig. 8) werden die Kabel 35, 40 in den Formraum 305 eingelegt, entweder manuell oder automatisiert, beispielsweise mittels eines Roboters. Dazu wird von oben her beispielsweise das erste Kabel 35 entlang der Längsrichtung beispielsweise an einem Beginn der Form 300 beginnend in das dritte oder zweite Formteil 320, 315 eingelegt.

Um das Kabel 35, 40 in das erste Formteil 310 im dritten Verfahrensschritt 415 einzulegen und durch den Aufnahmeraum 175, 195 zu führen, wird dies anhand des ersten Kabels 35 beispielhaft für alle Kabel 35, 40 der Kabelanordnung 20 erläutert. Analog erfolgt das Einlegen auch für die zweiten Kabel 40.

Das erste Kabel 35 wird zur Ausbildung des ersten Teils 36 der Kabelanordnung 20 dadurch in den ersten Aufnahmeraum 175 des Routerclips 15 eingelegt, dass der erste Wandungsabschnitt 325 des ersten Formteils 310 in Querrichtung um eine erste Biegeachse 365, die parallel zur x-Achse verläuft, nach außen in Querrichtung um wenigstens 30°, vorzugsweise um wenigstens 50°, insbesondere um wenigstens 70°, elastisch reversibel gebogen wird (strichliert in den Figur 8 dargestellt).

Der erste Wandungsabschnitt 325 wird unter Wirkung einer ersten Spannkraft F_{S1} aus der ersten Halteposition in eine erste Einlegeposition (mittels strichlierter Linie in Figur 8 dargestellt) um wenigstens 30°, insbesondere um wenigstens 50°, besonders vorteilhafterweise um wenigstens 70°, aus der ersten Halteposition (mittels durchgezogener Linie in den Figuren 5 und 8 dargestellt) um eine erste Biegeachse 365 herausgebogen. Die erste Biegeachse 365 verläuft parallel zur x-Achse. Beim Herausbiegen des ersten Wandungsabschnitts 325 um die erste Biegeachse 365 wird der erste Spalt 370 vergrößert. Dadurch dass der erste Wandungsabschnitt 325 nach außen gebogen wird, ist der erste Aufnahmeraum 175 in Querrichtung offen und es kann in einer schrägen Bewegung entlang der ersten Wandungsseitenfläche 340 über den ersten Spalt 370 das erste Kabel 35 in den ersten Aufnahmeraum 175 eingelegt werden.

Der dritte Werkstoff des ersten Formteils 310 ist vorzugsweise derart gewählt, dass der erste Wandungsabschnitt 325 mehrfach reversibel um die erste Biegeachse 365 um wenigstens 30°, vorzugsweise um wenigstens 50°, insbesondere um wenigstens 70°, aus ersten Halteposition in die erste Einlegeposition herausgebogen werden kann.

In der ersten Einlegeposition ist der erste Wandungsabschnitt 325 vorgespannt. Die erste Spannkraft F_{S1} kann beispielsweise durch den Roboter oder beim manuellen Einlegen durch einen Finger erzeugt und bereitgestellt werden. Durch die elastische Ausgestaltung des ersten Formteils 310 ist ein elastisches Herausbiegen des ersten Wandungsabschnitts 325 möglich und die erste Spannkraft F_{S1} wird konstruktiv so niedrig gehalten, dass diese durch das Einlegemittel leicht bereitstellbar ist.

Der erste Wandungsabschnitt 325 ist dabei derart elastisch reversibel ausgebildet, dass beim Herausbiegen des ersten Wandungsabschnitts 325 aus der ersten Halteposition in die erste Einlegeposition im Wesentlichen eine geometrische Ausgestaltung des Bodenabschnitts 335 aufrechterhalten wird, um so ein ungewolltes Lösen des Befestigungsabschnitts 110 aus der Aufnahme 360 zu verhindern. Ebenso bleibt der zweite Wandungsabschnitt 330 in der zweiten Halteposition, sodass der zweite Aufnahmeraum 195 seitlich geschlossen ist.

Während des Einlegens und Aufbiegens des ersten Wandungsabschnitts 325 des ersten Formteils 310 verbleiben die anderen ersten und zweiten Wandungsabschnitte 325, 330 der weiteren ersten Formteile 310 jeweils in der ersten und zweiten Halteposition. Damit ist ausschließlich der erste Aufnahmeraum 175 an dem Routerclip 15 seitlich geöffnet, an den gerade das erste Kabel 35 des ersten Teils 36 der Kabelanordnung 20 in den ersten Aufnahmeraum 175 eingelegt wird. Die weiteren ersten Aufnahmeräume 175 sind durch das Verbleiben der weiteren ersten und zweiten Wandungsabschnitte 325, 330 geschlossen.

In einem auf den dritten Verfahrensschritt 415 folgenden vierten Verfahrensschritt 420 wird das erste elektrische Kabel 35 des ersten Teils 36 weiter in Längsrichtung in den Formraum 305 geführt und eingelegt. Ferner wird der erste Wandungsabschnitt 325 des ersten Formteils 310 entlastet und die erste Spannkraft F_{S1} aufgehoben. Der gespannte erste Wandungsabschnitt 325 bewegt sich dann von der ersten Einlegeposition wieder zurück in die erste Halteposition und verschließt damit seitlich den ersten Aufnahmeraum 175. Außerdem führt bei der Bewegung aus der ersten Einlegeposition in die erste Halteposition das erste Kabel 35, das gegebenenfalls noch nicht ganz in den ersten Aufnahmeraum 175 eingelegt ist, vollständig in den ersten Aufnahmeraum 175. Dadurch dass der erste Spalt 370 kleiner als der minimale Außendurchmesser des kleinsten Kabels des ersten Teils 36 der Kabelanordnung 20 ausgebildet ist, hält der erste Wandungsabschnitt 325 das erste Kabel 35 in dem ersten Aufnahmeraum 175.

Der dritte und vierte Verfahrensschritt 415, 420 wird analog auch für weitere erste Kabel 35 des ersten Teils der Kabelanordnung 20 durchgeführt.

Das zweite Kabel 40 des zweiten Teils 41 der Kabelanordnung 20 wird in einem fünften Verfahrensschritt 425 in analoger Weise wie das erste Kabel 35 eingelegt. Im Unterschied dazu wird statt des ersten Wandungsabschnitts 325 der zweite Wandungsabschnitt 330 um eine zweite Biegeachse 380 mittels einer zweiten Spannkraft F_{S2}, die in entgegengesetzter Richtung zu der ersten Spannkraft F_{S1} wirkt, in Querrichtung vom Routerclip 15 und vom Formraum 305 weg nach außen um wenigstens 30°, vorzugsweise um wenigstens 50°, insbesondere um wenigstens 70° um die zweite Biegeachse 380 vom Formraum 305 weg gebogen.

Dadurch wird der zweite Spalt 375 aufgeweitet. Über den zweiten Spalt 375 wird entlang der zweiten Wandungsseitenfläche 345 das zweite elektrische Kabel 40 von oben her in den zweiten Aufnahmeraum 195 eingelegt. Die weiteren ersten Formteile 310 sind entlastet, sodass insbesondere der zweite Wandungsabschnitt 330 der weiteren ersten Formteile 310 in der zweiten Halteposition verbleibt und somit der zweite Aufnahmeraum 195 geschlossen ist.

In einem sechsten Verfahrensschritt 430, der auf den fünften Verfahrensschritt 425 folgt, wird das zweite elektrische Kabel 40 des ersten Teils 41 weiter in Längsrichtung in den Formraum 305 geführt und eingelegt. Das Bereitstellen der zweiten Spannkraft F_{S2} eingestellt und somit der zweite Wandungsabschnitt 330 entlastet. Der zweite Wandungsabschnitt 330, der im fünften Verfahrensschritt 425 gespannt wurde, biegt sich zurück aus der zweiten Einlegeposition um die zweite Biegeachse 380 in die zweite Halteposition. Gegebenenfalls führt dabei der zweite Wandungsabschnitt 330 das zweite Kabel 40 des zweiten Teils 41 der Kabelanordnung 20, die geringfügig aus dem zweiten Aufnahmeraum 195 herausgerutscht sind, wieder zurück in den zweiten Aufnahmeraum 195.

Dadurch, dass der zweite Spalt 375 schmaler als der kleinste minimale Außendurchmesser des kleinsten zweiten Kabels 40 des zweiten Teils 41 der Kabelanordnung 20 ist, wird ein Herausrutschen eines zweiten elektrischen Kabels 40 des zweiten Teils 41 der Kabelanordnung 20 oberseitig aus dem zweiten Aufnahmeraum 195 durch den zweiten Gegenhalterabschnitt 185 verhindert.

Der dritte bis sechste Verfahrensschritt 415, 420, 425, 430 werden solange durchgeführt, bis alle elektrischen Kabel 35, 40 der Kabelanordnung 20 in den Formraum 305 eingelegt sind. Ebenso werden der dritte bis sechste Verfahrensschritt 415, 420, 425, 430 auch an den weiteren Routerclipsen 15 und an den weiteren ersten Formteilen 310 durchgeführt, um dort die elektrischen Kabel 35, 40 zur Ausbildung des ersten und zweiten Teils 36, 41 der Kabelanordnung 20 in den jeweiligen weiteren Aufnahmeraum 175, 195 einzulegen. Am Ende der Durchführung des dritten bis sechsten Verfahrensschritts 415, 420, 425, 430 sind alle elektrischen Kabel 35, 40 der Kabelanordnung 20 in den Formraum 305 eingelegt. Dabei verlaufen die Kabel 35, 40 im Wesentlichen entlang der Längsachse und werden durch die in Längsrichtung beabstandet zueinander angeordneten Routerclips 15 sowie durch die ersten Formteile 310 in dem Formraum 305 gehalten.

Nach Abschluss des Einlegens mittels des dritten bis sechsten Verfahrensschritts 415, 420, 425, 430 wird in einem auf den sechsten Verfahrensschritt 430 folgenden siebten Verfahrensschritt 435 ein flüssiger erster Werkstoff und/oder zumindest ein erstes Vorprodukt des ersten Werkstoffs und/oder ein erste Vorprodukt des ersten Werkstoffs über die Einlegeöffnung 355 in den Formraum 305 eingebracht. Insbesondere kann hierbei ein Gemisch aus dem ersten Vorprodukt des ersten Werkstoffs und einem zweiten Vorprodukt in den Formraum 305 eingebracht werden.

Der flüssige erste Werkstoff und/oder das Gemisch aus dem ersten Vorprodukt und dem zweiten Vorprodukt des ersten Werkstoffs wird vorzugsweise oberseitig auf die Kabelanordnung 20 aufgebracht. Der flüssige erste Werkstoff und/oder das Gemisch des ersten und zweiten Vorprodukts weist eine derartige Viskosität auf, dass dieses die Kabelanordnung 20 umfließt. Dabei breitet sich der erste flüssige Werkstoff und/oder das Gemisch aus dem ersten und zweiten Vorprodukt des Werkstoffs sowohl in Längsrichtung als auch in Querrichtung aus und sackt in Richtung des Formgrunds 350 ab. Durch die Ausbreitung dringt zum einen der erste flüssige Werkstoff und/oder das Gemisch und/oder das erste Vorprodukt auch in den ersten und zweiten Aufnahmeraum 175, 195 ein, insbesondere auch durch den kleinen ersten und/oder zweiten Spalt 370, 375 und umfließt zum anderen neben dem ersten und zweiten Teil 36, 41 der Kabelanordnung 20 im ersten und zweiten Aufnahmeraum 175, 195 ebenso den Halter 100, den Verbindungsabschnitt 105 und vorzugsweise auch den Gegenhalter 115.

Um ein gutes Umfließen des Halters 100, des Verbindungsabschnitts 105 und/oder des Gegenhalters 115 sicherzustellen, kann zusätzlich der erste flüssige Werkstoff und/oder das Gemisch aus dem ersten und zweiten Vorprodukt und/oder das erste Vorprodukt über den ersten und/oder zweiten Spalt 370, 375 in den ersten und/oder zweiten Aufnahmeraum 175, 195 eingebracht werden. Dazu kann in analoger Weise zum dritten Verfahrensschritt 415 der erste Wandungsabschnitt 325 seitlich um die erste Biegeachse 365 vom Formraum 305 weggebogen werden, um den ersten Spalt 370 soweit aufzuweiten, dass mittels des Einspritzmittels der erste flüssige Werkstoff und/oder das Gemisch aus dem ersten und zweiten Vorprodukt und/oder das erste Vorprodukt in den ersten Aufnahmeraum 175 eingebracht werden kann. Das seitliche Einbringen in den ersten Aufnahmeraum 175 hat den Vorteil, dass ein besonders gutes Umfließen des ersten Teils 36 der Kabelanordnung 20 in dem ersten Aufnahmeraum 175 mit dem ersten flüssigen Werkstoff und/oder dem Gemisch aus dem ersten und zweiten Vorprodukt sichergestellt ist.

In analoger Weise zu dem fünften Verfahrensschritt 425 kann im siebten Verfahrensschritt 435 der zweite Wandungsabschnitt 330 um die zweite Biegeachse 380 vom Formraum 305 weggebogen werden, um den zweiten Spalt 375 aufzuweiten und seitlich den zweiten Aufnahmeraum 195 zu öffnen. Ebenso kann über den zweiten Spalt 375 der erste flüssige Werkstoff und/oder das Gemisch aus dem ersten und zweiten Vorprodukt und/oder das erste Vorprodukt in den zweiten Aufnahmeraum 195 eingebracht werden. Dadurch dass ebenso der zweite Aufnahmeraum 195 seitlich geöffnet wird, ist ein gutes Umfließen der Kabelanordnung 20 und des Halters 100, des Verbindungsabschnitts 105 und gegebenenfalls des Gegenhalters 115 mit dem ersten flüssigen Werkstoff und/oder dem Gemisch aus dem ersten und zweiten Vorprodukt und/oder dem ersten Vorprodukt sichergestellt.

In der Ausführungsform schäumt beim Aushärten der erste flüssige Werkstoff und/oder das Gemisch aus dem zweiten Vorprodukt und/oder das erste Vorprodukt auf. Dabei umschließt der aufschäumende erste flüssige Werkstoff und/oder das Gemisch aus dem ersten und zweiten Vorprodukt in dem ersten Aufnahmeraum 175 den ersten Teil 36 der Kabelanordnung 20 und in dem zweiten Aufnahmeraum 195 den zweiten Teil 41 der Kabelanordnung 20 sowie den in dem Formraum 305 angeordneten Halter 100, Verbindungsabschnitt 105 und den Gegenhalter 115 vorzugsweise vollständig. Dabei bildet beim Aushärten der erste flüssige Werkstoff und/oder das Gemisch aus dem ersten und zweiten Vorprodukt und/oder das erste Vorprodukt eine stoffschlüssige Verbindung mit dem Routerclip 15 am Verbindungsabschnitt 105 zumindest unterseitig an der zum Halter 100 zugewandten Seite des Gegenhalters 115 sowie zumindest an der ersten Anlagefläche 120 des Halters 100 aus.

Dadurch dass der Halter 100 mit der ersten Anlagefläche 120 auf dem Formgrund 350 aufsitzt, wird ein Eindringen des Gemischs aus dem ersten und zweiten Vorprodukt und/oder des ersten flüssigen Werkstoffs in die Aufnahme 360 vermieden.

Nach dem Aushärten des ersten flüssigen Werkstoffs und/oder des Gemischs aus dem ersten und zweiten Vorprodukt und/oder des ersten Vorprodukt in einem auf dem siebten Verfahrensschritt 435 folgenden achten Verfahrensschritt 430 zu dem Schaumwerkstoff der Ummantelung 25 wird der fertige Kabelbaum 10 aus dem Formraum 305 in dem auf den achten Verfahrensschritt 440 folgenden neunten Verfahrensschritt 445 entnommen.

Dazu kann ebenso nochmals der erste und zweite Wandungsabschnitt 325, 330 in Querrichtung in analoger Weise zum dritten und fünften Verfahrensschritt 415, 425um die jeweils zugeordnete Biegeachse 365, 380 nach außen hin aufgebogen werden, um einen guten Griff seitlich am Kabelbaum 10 sicherzustellen. Dadurch kann der Kabelbaum 10 ohne mechanische Beschädigung besonders einfach aus dem Formraum 305 über die gesamte Länge der Form 300 hinweg herausgenommen werden.

In der Montage des Kraftfahrzeugs wird jeweils der Kabelbaum 10 am Routerclip 15 mit dem Befestigungsabschnitt 110 in die Komponentenöffnung 295 eingesteckt, sodass über die, vorzugsweise Mehrzahl von, Routerclips 15 der Kabelbaum 10 an der Komponente 30, insbesondere an der Karosserie, besonders schnell und einfach befestigt.

Vorzugsweise wird der Befestigungsabschnitt 110 so weit in die Komponentenöffnung 295 eingeschoben, dass der Halter 100 mit der ersten Anlagefläche 120 an der Komponentenseitenfläche 296 aufliegt.

Der oben beschriebene Kabelbaum 10, der oben beschriebene Routerclip 15 und das Verfahren zur Herstellung des Kabelbaums 10 haben den Vorteil, dass durch den Routerclip 15 Kabel 35, 40 mit unterschiedlicher Querschnittsfläche zuverlässig in der Ummantelung 25 befestigt werden. Ferner sind Kräfte um den Routerclip 15 aus der Ummantelung 25 herauszuziehen besonders hoch und dies wird ferner zu einem Ausreißen der Kabelanordnung 20 aus der Ummantelung 25 führen.

Ferner kann auf zusätzliche Kabelbinder, Tapes oder ähnliche Befestigungsmittel verzichtet werden, um den Kabelbaum 10 im Kraftfahrzeug zu befestigen. Des Weiteren benötigt der Kabelbaum 10 besonders wenig Bauraum im Fahrzeug. Durch den Routerclip 15 kann auch die Befestigung des Kabelbaums 10 im Fahrzeug auf einfache Art und Weise optimiert werden, sodass ein Verlauf des Kabelbaums 10 zuverlässig gesichert ist und ein Herausrutschen des Kabelbaums 10 in Kraftfahrzeug aus seinem zugewiesenen Bauraum zuverlässig vermieden wird.

Des Weiteren wird durch den Routerclip 15 die Orientierung der Kabel 35, 40 zuverlässig festgelegt. Insbesondere kann die Aufteilung der Kabel 35, 40 in dem ersten und zweiten Teil 36, 41 definiert festgelegt werden. Des Weiteren ist der Kabelbaum 10 mittels des oben beschriebenen Verfahrens auch automatisiert herstellbar.

Des Weiteren kann mittels des oben beschriebenen Routerclips 15 sichergestellt werden, dass die Kabel 35, 40 nicht entlang von scharfen Kanten geführt werden.

Besonders vorteilhaft kann der Routerclip 15 in Großserie mittels beispielsweise eines Spritzgussverfahrens hergestellt werden. Auch ein 3D-Druck ist möglich. Der Routerclip 15 kann durch seine konstruktive Ausgestaltung optimal an die jeweilige Größe der Kabelanordnung 20 und des Kabelbaums 10 angepasst werden. Der Routerclip 15 kann insbesondere, wenn der Gegenhalter 115 in Querrichtung besonders breit ausgebildet ist, eine Kabelanordnung 20 mit einer großen Anzahl von Kabeln 35, 40 zuverlässig halten und auch in der Herstellung des Kabelbaums 10 im Formraum 305 fixieren. Durch die geringe Anzahl von Abschnitten 100, 105, 115 kann die Haltefunktion des Routerclips 15 in der Konstruktion besonders schnell und einfach adaptiert werden, um so mittels verschiedener Routerclips 15 verschiedene große Kabelanordnungen 20 zu fixieren.

### Bezugszeichenliste

- 10: Kabelbaum
- 15: Routerclip
- 20: Kabelanordnung
- 25: Ummantelung
- 30: Komponente, Karosserie
- 35: erstes elektrisches Kabel
- 36: erster Teil (der Kabelanordnung)
- 40: zweites elektrisches Kabel
- 41: zweiter Teil (der Kabelanordnung)
- 45: elektrischer Leiter
- 50: Kabelummantelung

- 100: Halter
- 105: Verbindungsabschnitt
- 110: Befestigungsabschnitt
- 115: Gegenhalter
- 120: erste Anlagefläche
- 125: erstes festes Ende
- 130: erste Seitenfläche
- 135: zweite Seitenfläche
- 140: zweite Anlagefläche
- 145: zweites festes Ende
- 150: Gerade
- 160: erster Gegenhalterabschnitt
- 165: erste Querseite
- 170: erster Halterabschnitt
- 175: erster Aufnahmeraum
- 180: zweite Querseite
- 185: zweiter Gegenhalterabschnitt
- 190: zweiter Halterabschnitt
- 195: zweiter Aufnahmeraum
- 200: drittes festes Ende
- 205: viertes festes Ende
- 210: erstes freies Ende
- 215: dritte Seitenfläche
- 220: zweites freies Ende
- 225: vierte Seitenfläche
- 230: erste Verzahnung
- 235: erster Zahn
- 240: erster Zahnkopf
- 245: Symmetrieebene
- 250: zweite Verzahnung
- 255: zweiter Zahn
- 260: zweiter Zahnkopf
- 265: dritte Verzahnung
- 270: dritter Zahn
- 275: vierte Verzahnung
- 280: vierter Zahn
- 285: Ebene
- 286: Befestigungslamelle/ Rastmittel
- 290: fünfte Seitenfläche
- 295: Komponentenöffnung
- 296: Komponentenseitenfläche

- 300: Form
- 305: Formraum
- 310: erstes Formteil
- 315: zweites Formteil
- 320: drittes Formteil
- 325: erster Wandungsabschnitt
- 330: zweiter Wandungsabschnitt
- 335: Bodenabschnitt
- 340: erste Wandungsseitenfläche
- 345: zweite Wandungsseitenfläche
- 350: Formgrund
- 355: Einlegeöffnung
- 360: Aufnahme
- 365: erste Biegeachse
- 370: erster Spalt
- 375: zweiter Spalt
- 380: zweite Biegeachse
- 405: erster Verfahrensschritt
- 410: zweiter Verfahrensschritt
- 415: dritter Verfahrensschritt
- 420: vierter Verfahrensschritt
- 425: fünfter Verfahrensschritt
- 430: sechster Verfahrensschritt
- 435: siebter Verfahrensschritt

- a: Abstand
- F_{S1}: erste Spannkraft
- F_{S2}: zweite Spannkraft
- L1: erste Breite
- L2: zweite Breite
- L3: dritte Breite
- L4: vierte Breite

## Patentansprüche

1. Routerclip (15) zur Befestigung eines Kabelbaums (10) an einer Komponente (30) eines Fahrzeugs,
- aufweisend einen Halter (100), einen Verbindungsabschnitt (105), einen Befestigungsabschnitt (110) und einen Gegenhalter (115),
- wobei sich der Verbindungsabschnitt (105) in einer ersten Richtung (z) erstreckt und den Halter (100) mit dem Gegenhalter (115) verbindet,
- wobei der Befestigungsabschnitt (110) auf einer dem Verbindungsabschnitt (105) abgewandten Seite des Halters (100) angeordnet ist und mit dem Halter (100) verbunden ist,
- wobei der Befestigungsabschnitt (110) ausgebildet ist, in die Komponente (30) einzugreifen und den Routerclip (15) an der Komponente (30) zu befestigen,
- wobei der Halter (100) mit einem ersten Halterabschnitt (170) und der Gegenhalter (115) mit einem ersten Gegenhalterabschnitt (160) eine erste Querseite (165) des Verbindungsabschnitts (105) überragen und gemeinsam einen ersten Aufnahmeraum (175) zur Aufnahme eines ersten Teils (36) einer Kabelanordnung (20) des Kabelbaums (10) begrenzen,
- wobei der Halter (100) mit einem zum ersten Halterabschnitt (170) in einer zur ersten Richtung (z) geneigt verlaufenden zweiten Richtung (y) gegenüberliegend angeordneten zweiten Halterabschnitt (190) und der Gegenhalter (115) mit einem zum ersten Gegenhalterabschnitt (160) in der zweiten Richtung (y) gegenüberliegend angeordneten zweiten Gegenhalterabschnitt (185) eine zweite Querseite (180) des Verbindungsabschnitts (105) überragen,
- wobei der zweite Gegenhalterabschnitt (185), der zweite Halterabschnitt (190) und die zweite Querseite (180) des Verbindungsabschnitts (105) gemeinsam einen zweiten Aufnahmeraum (195) zur Aufnahme eines zweiten Teils (41) der Kabelanordnung (20) des Kabelbaums (10) begrenzen.

2. Routerclip (15) nach Anspruch 1,
- wobei der Verbindungsabschnitt (105) sich entlang einer Geraden (150) erstreckt,
- wobei ein erstes freies Ende (210) des ersten Gegenhalterabschnitts (160) einen geringeren Abstand (a) in der ersten Richtung (z) zu dem Halter (100) aufweist als ein drittes festes Ende (200) des Verbindungsabschnitts (105), an dem der Verbindungsabschnitt (105) mit dem Gegenhalter (115) verbunden ist.

3. Routerclip (15) nach einem der vorhergehenden Ansprüche,
- wobei der erste Gegenhalterabschnitt (160) eine erste Verzahnung (230) aufweist,
- wobei die erste Verzahnung (230) dem Halter (100) zugewandt ist,
- und/oder
- wobei der zweite Gegenhalterabschnitt (185) eine zweite Verzahnung (250) aufweist,
- wobei die zweite Verzahnung (250) dem Halter (100) zugewandt ist.

4. Routerclip (15) nach einem der vorhergehenden Ansprüche,
- wobei der Verbindungsabschnitt (105) an der ersten Querseite (165) eine dritte Verzahnung (265) aufweist, die sich in den ersten Aufnahmeraum (175) erstreckt,
- und/oder
- wobei der Verbindungsabschnitt (105) an der zweiten Querseite (180) eine vierte Verzahnung (275) aufweist, die sich in den zweiten Aufnahmeraum (195) erstreckt,
- wobei vorzugsweise die erste Verzahnung (230) und die dritte Verzahnung (265) parallel zueinander verlaufend ausgerichtet sind,
- und/oder
- wobei vorzugsweise die erste Verzahnung (230) und die dritte Verzahnung (265) parallel zu dem Halter (100) verlaufend ausgerichtet sind.

5. Routerclip (15) nach einem der vorhergehenden Ansprüche,
- wobei der Halter (100) plattenförmig ausgebildet ist und auf einer dem Verbindungsabschnitt (105) abgewandten Seite eine erste Anlagefläche (120) aufweist,
- wobei die erste Anlagefläche (120) im Wesentlichen plan ausgebildet ist,
- wobei vorzugsweise die erste Anlagefläche (120) sich seitlich an den Befestigungsabschnitt (110) anschließt und der Halter (100) den Befestigungsabschnitt (110) in der zweiten Richtung (y) überragt.

6. Routerclip (15) nach einem der vorhergehenden Ansprüche,
- wobei der Halter (100), der Gegenhalter (115), der Verbindungsabschnitt (105) und der Befestigungsabschnitt (110) einstückig und materialeinheitlich aus einem zweiten Werkstoff ausgebildet sind,
- wobei der Routerclip (15) wenigstens einen der folgenden zweiten Werkstoffe aufweist: Polyamid, Polypropylen, Polyethylen, Polypropylen mit einem Copolymer, beispielsweise Polyethylenterephthalat, Bio-polymer, Polylactid, Faserverbundkunststoff. wobei der Routerclip (15) in einem Spritzgussvorgang spritzgegossen ist,
- oder
- wobei der Routerclip (15) 3D-gedruckt ist.

7. Routerclip (15) nach einem der vorhergehenden Ansprüche,
- wobei der erste Gegenhalterabschnitt (160) und/oder der zweite Gegenhalterabschnitt (185) und/oder der Halter (100) und/oder der Verbindungsabschnitt (105) im Wesentlichen starr ausgebildet sind.

8. Kabelbaum (10)
- mit einem Routerclip (15) nach einem der vorhergehenden Ansprüche, einer Kabelanordnung (20) von elektrischen Kabeln (35, 40) und einer Ummantelung (25),
- wobei die elektrischen Kabel (35, 40) entlang einer Längsrichtung (x), die geneigt zu der ersten Richtung (z) und zu der zweiten Richtung (y) ist, geführt sind,
- wobei ein erster Teil (36) der Kabelanordnung (20) durch den ersten Aufnahmeraum (175) und ein zweiter Teil (41) der Kabelanordnung (20) durch den zweiten Aufnahmeraum (195) geführt sind,
- wobei zumindest der Verbindungsabschnitt (105), vorzugsweise der Gegenhalter (115) und/oder der Halter (100) in die Ummantelung (25), zumindest abschnittsweise, vorzugsweise zumindest für 80 Prozent, insbesondere vollständig, eingebettet sind,
- wobei der Befestigungsabschnitt (110) die Ummantelung (25) in der ersten Richtung (z) überragt.

9. Kabelbaum (10) nach Anspruch 8,
- wobei die Ummantelung (25) einen Schaumwerkstoff aufweist,
- wobei der Schaumwerkstoff wenigstens einen der folgenden ersten Werkstoffe aufweist: Polyurethan, geschlossenporigen Schaum, offenporigen Schaum, Silikon Elastomers, gemischtporigen Schaum, Polymer-Füllstoff-Matriz.

10. Form (300) zur Herstellung eines Kabelbaums (10),
- wobei die Form (300) ein erstes Formteil (310) mit einem ersten Formraum (305) aufweist,
- wobei das erste Formteil (310) einen ersten Wandungsabschnitt (325), einen Bodenabschnitt (335) und einen zweiten Wandungsabschnitt (330) aufweist,
- wobei in einer zweiten Richtung (y) der zweite Wandungsabschnitt (330) gegenüberliegend zu dem ersten Wandungsabschnitt (325) angeordnet ist,
- wobei der Bodenabschnitt (335) den ersten Wandungsabschnitt (325) mit dem zweiten Wandungsabschnitt (330) verbindet,
- wobei zumindest der erste Wandungsabschnitt (325) und/oder der zweite Wandungsabschnitt (330) einen dritten Werkstoff aufweisen,
- wobei der dritte Werkstoff derart gewählt ist, dass der erste Wandungsabschnitt (325) mehrfach reversibel um eine erste Biegeachse (365) in einem ersten Winkel von wenigstens 30° bis 90° in den ersten Formraum (305) oder vom ersten Formraum (305) weg aus einer ersten Halteposition in eine erste Einlegeposition biegbar ist,
- wobei in der ersten Einlegeposition der erste Formraum (305) aufgeweitet ist und in der ersten Halteposition der erste Formraum (305) abschnittsweise durch den ersten Wandungsabschnitt (325) in der zweiten Richtung verschlossen ist.

11. Form (300) nach Anspruch 10,
- wobei der dritte Werkstoff derart gewählt ist, dass der zweite Wandungsabschnitt (330) mehrfach reversibel um eine zur ersten Biegeachse (365) im Wesentlichen parallel verlaufende zweite Biegeachse (380) in einem zweiten Winkel von wenigstens 30° bis 90° in den Formraum (305) oder vom Formraum (305) weg aus einer zweiten Halteposition in eine zweite Einlegeposition biegbar ist,
- wobei in der zweiten Einlegeposition der Formraum (305) in der zweiten Richtung (y) offen ist und in der zweiten Halteposition der Formraum (305) zumindest abschnittweise durch den zweiten Wandungsabschnitt (330) in der zweiten Richtung(y) verschlossen ist,
- wobei vorzugsweise der erste Wandungsabschnitt (325) unabhängig von dem zweiten Wandungsabschnitt (330) zwischen der ersten Einlegeposition und der ersten Halteposition reversibel elastisch biegbar ist.

12. Verfahren zur Herstellung eines Kabelbaums (10) nach einem der Ansprüche 8 bis 9,
- wobei eine Form (300) mit einem Formraum (305) bereitgestellt wird,
- wobei in die Form (300) ein Routerclip (15) nach einem der Ansprüche 1 bis 11 eingebracht wird,
- wobei die elektrischen Kabel (35, 40) in den Formraum (305) derart eingelegt werden, dass ein erster Teil (36) der Kabelanordnung (20) durch den ersten Aufnahmeraum (175) und ein zweiter Teil (41) der Kabelanordnung (20) durch den zweiten Aufnahmeraum (195) geführt werden,
- wobei ein flüssiger erster Werkstoff und/oder ein flüssiges erstes Vorprodukt des ersten Werkstoffs in den Formraum (305) eingebracht wird,
- wobei der flüssige erste Werkstoff oder das flüssige erste Vorprodukt des ersten Werkstoffs in den ersten Aufnahmeraum (175) und/oder in den zweiten Aufnahmeraum (195) eindringt und zumindest abschnittweise den Verbindungsabschnitt (105), den ersten Teil (36) der Kabelanordnung (20) und den zweiten Teil (41) der Kabelanordnung (20) umschließt,
- wobei der flüssige erste Werkstoff oder das erste Vorprodukt des ersten Werkstoffs zu dem Schaumwerkstoff der Ummantelung (25) ausgehärtet wird, die stoffschlüssig den Routerclip (15) mit der Kabelanordnung (20) verbindet.

13. Verfahren nach Anspruch 12,
- wobei eine Form (300) nach einem der Ansprüche 12 bis 14 bereitgestellt wird,
- wobei der erste Wandungsabschnitt (325) aus der ersten Halteposition vom Formraum (305) reversibel elastisch in die erste Einlegeposition derart gebogen wird, dass der erste Aufnahmeraum (175) des Routerclips (15) geöffnet ist,
- wobei in der ersten Einlegeposition des ersten Wandungsabschnitts (325) ein erstes elektrisches Kabel (35) in den ersten Aufnahmeraum (175) eingeführt wird,
- wobei der erste Wandungsabschnitt (325) aus der ersten Einlegeposition in die erste Halteposition überführt wird.

14. Verfahren nach Anspruch 12 oder 13,
- wobei der zweite Wandungsabschnitt (330) aus einer zweiten Halteposition vom Formraum (305) weg reversibel elastisch in eine zweite Einlegeposition derart gebogen wird, dass der zweite Aufnahmeraum (195) des Routerclips (15) geöffnet ist,
- wobei in der zweiten Einlegeposition des zweiten Wandungsabschnitts (330) ein zweites elektrisches Kabel (40) der Kabelanordnung in den zweiten Aufnahmeraum (195) eingeführt wird,
- wobei der zweite Wandungsabschnitt (330) aus der zweiten Einlegeposition in die zweite Halteposition überführt wird.

15. Verfahren nach einem der Ansprüche 12 bis 14,
- wobei in der ersten Halteposition der erste Wandungsabschnitt (325) entspannt ist,
- wobei beim Biegen des ersten Wandungsabschnitts (325) aus der ersten Halteposition in die erste Einlegeposition der erste Wandungsabschnitt (325) unter Bereitstellung einer ersten Spannkraft (F_{S1}) gespannt wird,
- wobei bei Aufhebung der ersten Spannkraft (F_{S1}) der erste Wandungsabschnitt (325) aus der ersten Einlegeposition selbstständig in die erste Halteposition zurückkehrt.
